# EUROPÄISCHE PATENTSCHRIFT

(11) **EP 3 011 726 B1**
(45) Veröffentlichungstag und Bekanntmachung des Hinweises auf die Patenterteilung: **26.09.2018**
(21) Anmeldenummer: 14758797.6
(22) Anmeldetag: 19.08.2014
(51) Int. Cl.: H04L 29/12

(54) **KOMMUNIKATIONSGERÄT UND VERFAHREN ZUR KOMMUNIKATION**
COMMUNICATION DEVICE AND METHOD OF COMMUNICATION
DISPOSITIF DE COMMUNICATION ET PROCÉDÉ DE COMMUNICATION

(30) Priorität: 27.09.2013 DE 102013219543
(43) Veröffentlichungstag der Anmeldung: 27.04.2016
(73) Patentinhaber: Siemens Aktiengesellschaft, 80333 München (DE)
(72) Erfinder: KUNTSCHKE, Richard, 84144 Geisenhausen (DE); SCHOLZ, Andreas, 85716 Unterschleißheim (DE)
(86) Internationale Anmeldenummer: PCT/EP2014/067609
(87) Internationale Veröffentlichungsnummer: WO 2015/043834

(56) Entgegenhaltungen:
- EP-A1- 1 750 464
- US-A1- 2007 019 609
- IEEE, PISCATAWAY, NJ, USA, 1. März 2002 (2002-03-01), XP040383749,

## Beschreibung

Die vorliegende Erfindung betrifft ein Kommunikationsgerät sowie ein Kommunikationssystem mit einer Mehrzahl solcher Kommunikationsgeräte. Des Weiteren betrifft die Erfindung ein Verfahren zur Kommunikation zwischen einem Kommunikationsgerät und einer zentralen Einrichtung in einem Kommunikationssystem.

In verschiedenen technischen Gebieten findet eine Kommunikation zwischen einer zentralen Einrichtung, wie einem zentralen Server, und verschiedenen weiteren Kommunikationsgeräten statt. Hierbei müssen sich die Kommunikationsgeräte gegenüber der zentralen Einrichtung identifizieren, um während der weiteren Kommunikation adressiert werden zu können, d.h. um für sie bestimmte Nachrichten empfangen zu können. Hierzu werden häufig MAC-Adressen verwendet, die für jedes Kommunikationsgerät festgelegt sind. MAC-Adressen sind den Geräten eindeutig zuordenbar. Durch diese eindeutige Zuordenbarkeit ist es möglich, jedes einzelne Kommunikationsgerät zu bestimmen und zu erfassen, beispielsweise im Rahmen eines drahtlosen Kommunikationsnetzwerks.

So kann eine drahtlose Kommunikation Vorteile in Bezug auf Automatisierungs-/Erfassungssysteme bieten. Beispielsweise ist es möglich Personen oder Gegenstände über mit diesen verbundene Kommunikationsgeräte zu erfassen und mit diesen zu kommunizieren ohne dass Terminals oder ähnliche Vorrichtungen aufgestellt werden müssen. Dies kann vorteilhaft in Bezug auf Durchsatz und Komfort sein.

Ein mögliches Anwendungsbeispiel ist ein drahtloses elektronisches Ticketsystem für den öffentlichen Personennahverkehr (ÖPNV). In einem drahtlosen elektronischen Ticketsystem müssen dann einzelne Fahrten von Benutzern nicht mehr per durch gedruckte Fahrscheine oder andere Arten von Kundenkarten bezahlt werden, beispielsweise bei Durchgang durch ein Drehkreuz. Stattdessen kann für jeden Kunden eine intelligente Kundenkarte mit Funkschnittstelle bereitgestellt werden, welche mit dem Transportmittel, beispielsweise über einen zentralen Kommunikationsserver, kommunizieren kann. Auf diese Weise kann dokumentiert werden, welche Transportmittel wann durch einen Kunden benutzt wurden. Die Abrechnung kann basierend auf diesen Daten auf verschiedene Weise erfolgen, beispielsweise ähnlich zu einer Telefonrechnung rückwirkend für den vergangenen Monat und könnte sogar einen Einzelverbindungsnachweis enthalten.

Bei der Verwendung einer solchen drahtlosen Schnittstelle besteht jedoch die Gefahr, dass die Kommunikation zwischen der Kundenkarte und dem Transportmittel bzw. dem zentralen Kommunikationsserver abgehört werden kann. Werden keine geeigneten Maßnahmen getroffen, wie z.B. eine Verschlüsselung der übertragenen Daten, ist es daher möglich, einzelne Kunden bzw. die diesen zugeordneten Kommunikationsgeräte eindeutig auf Grund der mitgehörten bzw. abgehörten Daten zu identifizieren und als Folge daraus auch deren Bewegung zu verfolgen. Dies wird auch Tracking genannt.

Um die Übertragung von Daten abzusichern bzw. ein Abhören du Abgreifen der Daten zu erschweren, können beispielsweise Verschlüsselungsverfahren wie SSL eingesetzt werden, welche sicherstellen, dass nur der gewünschte Empfänger die Daten entschlüsseln kann. Die übertragenen Daten an sich können damit abgesichert werden.

Allerdings werden für die Übermittlung der Daten im Netzwerk Adressen verwendet, insbesondere MAC-Adressen, welche es erlauben, den einzelnen Kommunikationspartner innerhalb des Netzwerks zu adressieren. Üblicherweise werden in Netzwerken, wie auch dem Internet, für Netzwerkkarten feste MAC-Adressen vom Hersteller vergeben. Dadurch kann auf der einen Seite sichergestellt werden, dass Adressen innerhalb der Netzwerke eindeutig sind. Auf der anderen Seite sind solche festen MAC-Adressen bereits ausreichend, um eine Nachverfolgung, d.h. Tracking, von Benutzern zu ermöglichen, da die MAC-Adressen eindeutig für jedes Kommunikationsgerät, bzw. die in solchen Geräten enthaltenen Netzwerkkarten, sind und leicht abgehört werden können.

Um ein Tracking von Kommunikationsgeräten und damit deren Benutzern auszuschließen, wäre also neben einer Verschlüsselung auf Ebene der Daten zusätzlich eine Anonymisierung auf Ebene der Adressierung wünschenswert.

In einem Verfahren zur Generierung von anonymen MAC-Adressen erzeugt ein Netzwerkteilnehmer, d.h. ein Kommunikationsgerät in dem Netzwerk, eine zufällige MAC-Adresse und meldet diese an einen zentralen Knoten bzw. Access Point. Der zentrale Knoten prüft diese Adresse auf Eindeutigkeit. Bei doppelt gewählten Adressen muss der Netzwerkteilnehmer eine neue Adresse generieren und den Prozess erneut starten. Ist die Adresse eindeutig, darf der Netzwerkteilnehmer unter Verwendung der generierten Adresse kommunizieren.

Eine andere Möglichkeit besteht darin, dass der zentrale Knoten anonyme MAC-Adressen erzeugt und diese an Netzwerkteilnehmer verteilt. Dieses Verfahren hat im Vergleich zu dem oben genannten Verfahren den Vorteil, dass doppelte Vergaben von Adressen direkt bei der Erzeugung der Adresse ausgeschlossen werden können.

Alternativ kann ein Netzwerkteilnehmer eine zufällige MAC-Adresse durch eine komplexe Verbindung einer Zufallszahl mit einer geheimen festen MAC-Adresse erzeugen. Dadurch kann, wenn auch mit Einschränkungen, erreicht werden, dass die generierte Adresse zufällig genug ist, um Anonymität zu gewährleisten, und die Wahrscheinlichkeit von Kollisionen so klein ist, dass keine zentrale Vergabe der MAC-Adresse erforderlich ist.

US 2007/019609 A1 offenbart ein System, in dem mobile Geräte temporäre MAC-Adressen erzeugen, wobei Informationen eines Access-Points in Kombination mit einer permanenten MAC-Adresse des jeweiligen mobilen Geräts verwendet werden.

Temporary MAC Adresses for Anonymity, IEEE, Piscataway, NJ, USA, 1. März 2002, offenbart einen Überblick über das Erzeugen von temporären MAC-Adressen.

Vor diesem Hintergrund besteht eine Aufgabe der vorliegenden Erfindung darin, eine sichere und gleichzeitig einfache Kommunikation von Netzwerkgeräten mit einem zentralen Kommunikationsserver zu ermöglichen.

Demgemäß wird ein Kommunikationsgerät vorgeschlagen, das über eine Schnittstelle mit einer zentralen Einrichtung in einem Kommunikationssystem verbindbar ist. Das Kommunikationsgerät weist eine Sende- und Empfangseinheit zum Empfangen einer Broadcastnachricht von der zentralen Einrichtung, wobei die Broadcastnachricht Informationen zum Initiieren einer Kommunikation zwischen dem Kommunikationsgerät und der zentralen Einrichtung aufweist und wobei die Broadcastnachricht Informationen aufweist, die Eigenschaften der Hardware-Adresse festlegen, wobei die Eigenschaften einen Wertebereich der Hardware-Adresse vorgeben, der je nach Größe des Kommunikationssystems und der damit verbundenen Anzahl von Kommunikationsgeräten innerhalb des Kommunikationssystems vergrößert oder verkleinert werden kann, und eine Steuereinheit zum Auswählen einer Hardware-Adresse für das Kommunikationsgerät in Antwort auf die in der Broadcastnachricht enthaltenen Informationen auf, wobei die ausgewählte Hardware-Adresse zur Adressierung des Kommunikationsgeräts für Nachrichten von der zentralen Einrichtung verwendbar ist. Die Sende- und Empfangseinheit ist dazu eingerichtet, mit der zentralen Einrichtung unter Verwendung der ausgewählten Hardware-Adresse während der Dauer einer Sitzung zu kommunizieren. Die Steuereinheit ist dazu eingerichtet, die ausgewählte Hardware-Adresse nach Ablauf der Dauer der Sitzung zu löschen. Im Gegensatz zu den bekannten Verfahren wird durch das Kommunikationsgerät eine einfache Auswahl einer Hardware-Adresse durchgeführt, bei der keine komplexen Rechenvorgänge oder Vorab-Kommunikation mit der zentralen Einrichtung nötig sind. Gleichzeitig wird jedoch durch die Auswahl der Hardware-Adresse, die nicht der physikalischen, werksseitig vorgegebenen MAC-Adresse entspricht, eine Anonymität des Kommunikationsgeräts innerhalb des Netzwerks gewährleistet. Auf diese Weise kann eine Nachverfolgung bzw. ein Tracking eines Benutzers anhand seines Kommunikationsgeräts ausgeschlossen werden.

Das beschriebene Kommunikationsgerät beruht auf dem folgenden üblichen Ablauf innerhalb von elektronischen Erfassungssystemen, wie z.B. einem Ticketsystem im ÖPNV.

Zunächst sendet die zentrale Einrichtung, wie beispielsweise ein zentraler Kommunikationsserver in einem Transportmittel, eine Broadcastnachricht an alle Kommunikationsgeräte, wie beispielsweise Kundenkarten, mit der Aufforderung, sich beim Transportmittel, d.h. der zentralen Einrichtung, zu melden. Eine solche Broadcastnachricht kann verschiedene Daten wie die Fahrzeugnummer, die Haltestelle oder ähnliches beinhalten. Die einzelnen Karten bzw. Kommunikationsgeräte senden dann ihre Kundennummer oder ähnliche Daten an das Transportmittel. Die Übertragung der Daten kann verschlüsselt sein, um diese Daten zu sichern.

Das Versenden der Broadcastnachricht ist aus Adressierungssicht unproblematisch. Die Broadcastnachricht wird an alle Kommunikationsgeräte in Reichweite der zentralen Einrichtung versendet und beinhaltet keine karten- bzw. kommunikationsgerät-spezifische Adresse. Ein Abhören der Broadcastnachricht erlaubt es also nicht, einzelne Karten zu tracken bzw. nachzuverfolgen.

Das Senden von Daten von den Kommunikationsgeräten an die zentrale Einrichtung kann je nach Anforderungen und verwendeten Protokollen das Hin- und Her-Senden mehrerer Pakete im Netzwerk umfassen. Ein SSL-Handshake beispielsweise umfasst mehrere Pakete. Da es sich bei dieser Kommunikation um eine Punkt-zu-Punkt-Verbindung zwischen dem jeweiligen Kommunikationsgerät und der zentralen Einrichtung handelt, ist es erforderlich eine gerätespezifische Adresse einzusetzen, um diese Kommunikation zu ermöglichen.

Allerdings ist es für manche Anwendungen, wie beispielsweise Bezahlsysteme, nur nötig, die Kommunikation zeitlich begrenzt aufrechtzuerhalten. Diese Hardware-Adresse wird daher nur sehr kurzfristig benötigt, nämlich nur für den Zeitraum, bis die kundenspezifischen Daten an die zentrale Einrichtung gesendet wurden.

Die Sequenz von ausgetauschten Nachrichten zur Übersendung der kundenspezifischen Daten stellt eine Sitzung bzw. Session dar. Für die Kommunikation in einem solchen System, z.B. einem Ticketsystem, ist es lediglich erforderlich, dass Kommunikationsgeräte, wie beispielsweise Karten, während der Session adressierbar sind. Nach Abschluss einer solchen Sitzung bzw. Session ist es nicht mehr erforderlich, Kommunikationsgeräte weiterhin adressieren zu können. Sollen Kommunikationsgeräte zu einem späteren Zeitpunkt ein weiteres Mal erfasst werden, wird das komplette Verfahren beginnend beim Broadcast neu gestartet.

Gemäß dem beschriebenen Kommunikationsgerät wird also eine Sitzungs- bzw. Session-Hardware-Adresse erzeugt. Das bedeutet, dass eine Hardware- bzw. MAC-Adresse erzeugt wird, die für den Zeitraum der Sitzung eine eindeutige Adressierung von Kommunikationsgeräten ermöglicht, welche aber für jede Sitzung zufällig gewählt werden kann und damit eine anonyme Nutzung ermöglicht.

Um Angriffen auf den Datenverkehr vorzubeugen oder diese zu erkennen, können auf Sitzungs-Ebene geeignete Verschlüsselungsverfahren eingesetzt werden, die beispielsweise sicherstellen, dass gefälschte Pakete erkannt und verworfen werden können. Sollte es zu doppelt vergebenen bzw. ausgewählten und somit doppelt genutzten Hardware-Adresse kommen, würde dies aus Anwendungssicht einen Angriff darstellen. Das bedeutet, dass Datenpakete von Knoten empfangen werden, mit denen eigentlich nicht kommuniziert werden soll. Diese Pakete können durch solche Verschlüsselungsverfahren erkannt und verworfen.

Um eine Nichterreichbarkeit eines Kommunikationsgeräts durch ein solches Verwerfen von Datenpaketen zu vermeiden, sind verschiedene Verfahren möglich. Beispielsweise kann eine Broadcastnachricht doppelt oder öfter gesendet werden, so dass ein Kommunikationsgerät bei einem ersten Fehlversuch eine neue Hardware-Adresse erzeugen würde. Die Wahrscheinlichkeit, dass eine Kollision und damit ein Verwerfen von Daten öfter hintereinander für dasselbe Kommunikationsgerät auftreten, ist gering.

Die Broadcastnachricht weist Informationen auf, die Eigenschaften der Hardware-Adresse festlegen.

In der Broadcastnachricht sind demnach Informationen enthalten sein, die einen Hinweis darauf enthalten, wie die Hardware-Adresse durch die Steuereinheit ausgewählt wird. Auf diese Weise kann das Auswählen der Hardware-Adressen zwar noch zufällig sein, wird jedoch in Bezug auf die durchzuführende Kommunikation eingeschränkt. Die zentrale Einrichtung kann somit das zufällige Auswählen der Hardware-Adresse durch Rahmenbedingungen vorgeben.

Ferner geben die Eigenschaften einen Wertebereich der Hardware-Adresse vor. Indem ein Wertebereich der Hardware-Adresse vorgegeben wird, kann sichergestellt werden, dass die Wahrscheinlichkeit von Kollisionen, das heißt doppelt vergebenen Hardware-Adressen innerhalb des Kommunikationssystems, verringert wird. So kann beispielsweise je nach Größe des Kommunikationssystems, und der damit verbundenen Anzahl von Kommunikationsgeräten innerhalb des Kommunikationssystems, der mögliche Wertebereich der Hardware-Adressen vergrößert oder verkleinert werden. Bei einer höheren Menge an Kommunikationsgeräten sollte der Wertebereich größer sein als bei einer kleineren Menge an Kommunikationsgeräten.

Gemäß einer weiteren Ausführungsform geben die Eigenschaften eine Gültigkeitsdauer der Hardware-Adresse vor.

So kann beispielsweise in der Broadcastnachricht festgelegt werden, dass eine Hardware-Adresse nur eine maximale Gültigkeitsdauer aufweist. Die Gültigkeitsdauer der Hardware-Adresse kann sich von der Dauer einer Sitzung unterscheiden.

Gemäß einer weiteren Ausführungsform ist die Steuereinheit dazu eingerichtet, dass eine Hardware-Adresse für das Kommunikationsgerät in Antwort auf die in der Broadcastnachricht enthaltenen Informationen zufällig oder pseudo-zufällig.

So kann beispielsweise die Steuereinheit einen Algorithmus verwenden, um pseudo-zufällig eine Hardware-Adresse auszuwählen.

Gemäß einer weiteren Ausführungsform ist die Steuereinheit dazu eingerichtet, die Hardware-Adresse basierend auf den Informationen in der Broadcastnachricht auszuwählen.

Die Steuereinheit ist gemäß dieser Ausführungsform dazu eingerichtet, die Informationen zu berücksichtigen, die in der Broadcastnachricht enthalten sind, wenn sie die Hardware-Adresse auswählt. Auf diese Weise können Vorgaben, die durch die zentrale Einrichtung in der Broadcastnachricht an das Kommunikationsgerät übermittelt werden, bei der Auswahl der Hardware-Adresse berücksichtigt werden.

Gemäß einer weiteren Ausführungsform ist die Steuereinheit dazu eingerichtet, die Hardware-Adresse basierend auf den Informationen in der Broadcastnachricht zu erzeugen.

Gemäß dieser Ausführungsform ist die Steuereinheit nicht nur dazu eingerichtet, eine Hardware-Adresse auszuwählen, sondern auch diese zu erzeugen. Hierbei kann die Steuereinheit die Informationen berücksichtigen, um die Hardware-Adresse gemäß den Vorgaben, die in den Informationen in der Broadcastnachricht enthalten sind, zu erzeugen.

Gemäß einer weiteren Ausführungsform weist das Kommunikationsgerät eine Speichereinheit auf, in der eine Mehrzahl von Hardware-Adressen gespeichert ist, wobei die Steuereinheit dazu eingerichtet ist, eine Hardware-Adresse aus der gespeicherten Mehrzahl von Hardware-Adressen auszuwählen.

Die Steuereinheit kann beispielsweise eine Mehrzahl von Hardware-Adressen basierend auf den Informationen in der Broadcastnachricht erzeugen, und diese in der Speichereinheit speichern. In einem weiteren Schritt kann die Steuereinheit dann eine Hardware-Adresse aus der gespeicherten Mehrzahl von Hardware-Adressen auswählen. Alternativ kann bereits werksseitig eine Mehrzahl von Hardware-Adressen in der Speichereinheit gespeichert werden, wobei die Steuereinheit dann basierend auf der empfangenen Broadcastnachricht eine passende Hardware-Adresse aus der gespeicherten Mehrzahl von Hardware-Adressen auswählen kann. Die ausgewählte Hardware-Adresse kann nach Ablauf der Dauer der Sitzung vollständig aus der Speichereinheit gelöscht werden, oder als bereits verwendet gekennzeichnet werden. Alternativ kann die Hardware-Adresse auch zur erneuten Auswahl in der Speichereinheit verbleiben.

Gemäß einer weiteren Ausführungsform weist die Broadcastnachricht Informationen auf, die eine Dauer der Sitzung festlegen.

Eine Dauer der Sitzung kann somit durch die zentrale Einrichtung festgelegt werden. Die Dauer der Sitzung kann auch für die Gültigkeitsdauer der Hardware-Adresse verwendet werden. Alternativ kann sich die Dauer der Sitzung auch von der Gültigkeitsdauer der Hardware-Adresse unterscheiden, wenn die Broadcastnachricht weitere Informationen aufweist, die die Gültigkeitsdauer der Hardware-Adresse festlegen.

Gemäß einer weiteren Ausführungsform ist die Dauer der Sitzung durch eine Zeitdauer und/oder eine Anzahl von gesendeten und/oder empfangenen Nachrichten definiert.

Die Dauer der Sitzung kann somit entweder durch eine Zeitmessung bestimmt werden, oder die Anzahl von gesendeten und empfangenen Nachrichten kann gezählt werden, welche dann die Dauer der Sitzung bestimmen. Beispielsweise kann festgelegt sein, dass die Dauer der Sitzung so festgelegt wird, dass ausreichend Zeit besteht, bzw. eine ausreichende Anzahl an Nachrichten gesendet werden kann, um die nötigen Benutzerdaten von dem Kommunikationsgerät an die zentrale Einrichtung zu senden.

Gemäß einer weiteren Ausführungsform ist die Sende- und Empfangseinheit dazu eingerichtet, benutzerspezifische Daten an die zentrale Einrichtung zu senden.

Da üblicherweise benutzerspezifische Daten, wie Kundendaten oder andere Informationen, nur kurze Zeit benötigen, um gesendet zu werden, kann eine Sitzungsdauer kurz sein. Beispielsweise, wenn es sich bei dem Kommunikationssystem um ein Ticketsystem handelt, können die benutzerspezifischen Daten sich auf Bezahlvorgänge beziehen, und beispielsweise Kundendaten aufweisen.

Gemäß einer weiteren Ausführungsform wird ein Kommunikationssystem mit einer zentralen Einrichtung und einer Anzahl von Kommunikationsgeräten, wie sie oben beschrieben wurden, vorgeschlagen.

Die Anzahl der Kommunikationsgeräte kann lediglich ein Kommunikationsgerät oder auch mehrere Kommunikationsgeräte sein.

Gemäß einer Ausführungsform kann das Kommunikationssystem ein leitungsloses Telekommunikationsnetzwerk sein.

Beispielsweise kann es sich bei dem Kommunikationssystem um ein WLAN-Netzwerk handeln. Eine andere Möglichkeit eines leitungslosen Telekommunikationsnetzwerks ist ein reines Telekommunikationsnetzwerk, das über Mobilfunk funktioniert. Auch andere Arten von drahtlosen Netzwerken und Kommunikationsmöglichkeiten wie RFID sind möglich.

Gemäß einer weiteren Ausführungsform weist das Kommunikationssystem eine beschränkte Reichweite auf.

Gemäß dieser Ausführungsform ist das Kommunikationssystem lediglich in einem beschränkten räumlichen Bereich verfügbar. Auf diese Weise ist die Wahrscheinlichkeit von Kollisionen zwischen verschiedenen Kommunikationsgeräten durch Auswahl der Hardware-Adressen beschränkt, da nur eine beschränkte Anzahl von Kommunikationsgeräten innerhalb der Reichweite des Kommunikationssystems bzw. der zentralen Einrichtung sind.

Gemäß einer weiteren Ausführungsform weist das Kommunikationssystem ein Bezahlsystem auf, wobei die zentrale Einrichtung dazu eingerichtet ist, Bezahlvorgänge mit den Kommunikationsgeräten durchzuführen.

Beispielsweise kann das Kommunikationssystem ein Ticketsystem für den öffentlichen Personennahverkehr oder an Eingängen zu öffentlichen Einrichtungen sein. Hierbei können die Kommunikationsgeräte kundenspezifische Daten an die zentrale Einrichtung über das Kommunikationssystem senden, um Bezahlvorgänge durchzuführen.

Gemäß einem weiteren Aspekt wird ein Verfahren zur Kommunikation zwischen einem Kommunikationsgerät und einer zentralen Einrichtung in einem Kommunikationssystem, die über eine Schnittstelle miteinander verbindbar sind, vorgeschlagen. Das Verfahren weist die folgenden Schritte auf: Empfangen einer Broadcastnachricht von der zentralen Einrichtung, wobei die Broadcastnachricht Informationen zum Initiieren einer Kommunikation zwischen dem Kommunikationsgerät und der zentralen Einrichtung aufweist und wobei die Broadcastnachricht Informationen aufweist, die Eigenschaften der Hard ware-Adresse festlegen, wobei die Eigenschaften einen Wertebereich der Hardware-Adresse vorgeben, der je nach Größe des Kommunikationssystems und der damit verbundenen Anzahl von Kommunikationsgeräten innerhalb des Kommunikationssystems vergrößert oder verkleinert werden kann, zufälliges Auswählen einer Hardware-Adresse für das Kommunikationsgerät in Antwort auf die Broadcastnachricht, wobei die ausgewählte Hardware-Adresse zur Adressierung des Kommunikationsgeräts für Nachrichten von der zentralen Einrichtung verwendbar ist, Kommunizieren zwischen dem Kommunikationsgerät und der zentralen Einrichtung unter Verwendung der ausgewählten Hardware-Adresse während der Dauer einer Sitzung und Löschen der ausgewählten Hardware-Adresse nach Ablauf der Dauer der Sitzung.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine Ausführungsform eines Kommunikationsgeräts;
Fig. 2 bis 4 zeigen Ausführungsformen eines Kommunikationssystem in verschiedenen Kommunikationsschritten; und
Fig. 5 zeigt ein Verfahren zur Kommunikation zwischen einem Kommunikationsgerät und einer zentralen Einrichtung.

In den Figuren sind gleiche oder funktionsgleiche Elemente mit denselben Bezugszeichen versehen worden, sofern nichts anderes angegeben ist.

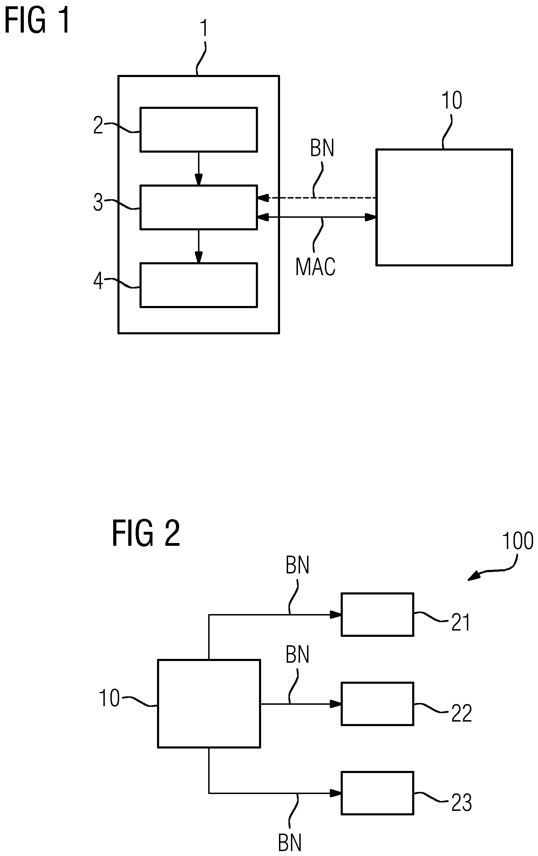

Fig. 1 zeigt eine Ausführungsform eines Kommunikationsgeräts 1, das mit einer zentralen Einrichtung 10 kommuniziert. Diese zentrale Einrichtung 10 sendet eine Broadcastnachricht BN an das Kommunikationsgerät 1 und weitere Kommunikationsgeräte, die sich in dem Kommunikationssystem aufhalten. Dies ist in den Fig. 2 - 4 gezeigt.

Das Kommunikationsgerät 1 weist eine Sende- und Empfangseinheit 3 auf, die die Broadcastnachricht BN empfängt. Basierend auf Informationen, die in der Broadcastnachricht BN enthalten sind, wählt eine Steuereinheit 2 des Kommunikationsgeräts 1 eine Hardware-Adresse MAC aus. Die Sende- und Empfangseinheit 3 verwendet diese Hardware-Adresse MAC, um mit der zentralen Einrichtung 10 zu kommunizieren. Die Steuereinheit 2 kann die Hardware-Adresse MAC beispielsweise aus einer Mehrzahl von Hardware-Adressen MAC, die in einer Speichereinheit 4 des Kommunikationsgeräts 1 gespeichert sind, auswählen.

Nach Ablauf einer Sitzung, die beispielsweise durch eine Anzahl von zu übertragenden Nachrichten bestimmt ist, wird die verwendete Hardware-Adresse MAC gelöscht. Für eine erneute Kommunikation zwischen dem Kommunikationsgerät 1 und der zentralen Einrichtung 10, nach Empfangen einer Broadcastnachricht BN, muss eine neue Hardware-Adresse MAC ausgewählt oder erzeugt werden.

Fig. 2 zeigt ein Kommunikationssystem 100, das eine Mehrzahl von Kommunikationsgeräten 21-23 aufweist. Der Aufbau der einzelnen Kommunikationsgeräte 21-23 ist identisch zu dem Aufbau des Kommunikationsgeräts 1 aus Figur 1.

Zunächst sendet eine zentrale Einrichtung 10 eine Broadcastnachricht BN an alle Kommunikationsgeräte 21-23, die in dem Kommunikationssystem vorhanden und daher erreichbar sind. Nach Empfangen der Broadcastnachricht BN kann jedes der Kommunikationsgeräte 21-23 eine eigene Hardware-Adresse auswählen.

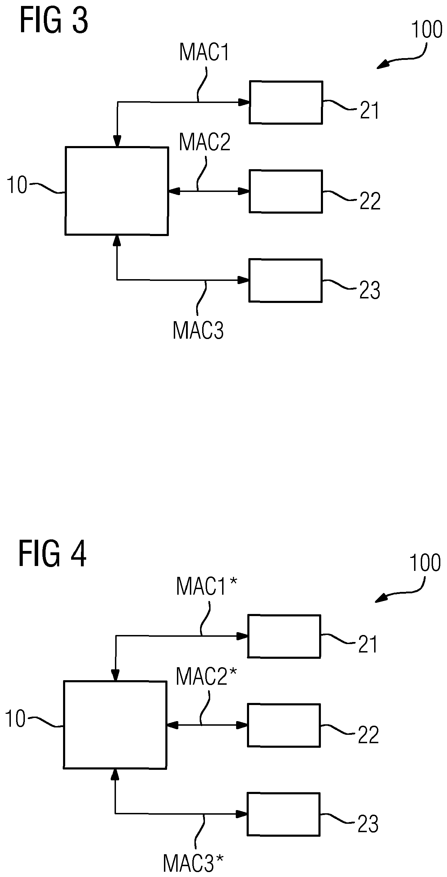

Wie in Fig. 3 gezeigt ist, wählt jedes Kommunikationsgerät 21-23 eine eigene Hardware-Adresse aus, die sich voneinander unterscheiden. Somit kommuniziert das Kommunikationsgerät 21 mit der zentralen Einrichtung 10 unter Verwendung der Hardware-Adresse MAC1, das Kommunikationsgerät 22 unter Verwendung der Hardware-Adresse MAC2 und das Kommunikationsgerät 23 unter Verwendung der Hardware-Adresse MAC3. Durch die verschiedenen Hardware-Adressen MAC1-MAC3 kann jedes Kommunikationsgerät 21-23 innerhalb des Kommunikationssystems 100 eindeutig identifiziert und adressiert werden. Da für eine Sitzung bzw. Session jedes Mal eine neue Hardware-Adresse ausgewählt wird, ist die Kommunikation innerhalb des Kommunikationsnetzwerks 100 anonymisiert. Jede Hardware-Adresse MAC1-MAC3 enthält keine Daten, die auf eine reale Hardware-Adresse der Kommunikationsgeräte 21-23 schließen lässt.

Nach Beendigung einer Sitzung werden die Hardware-Adressen MAC1-MAC3 gelöscht. Für eine neue Sitzung und neue Übertragung von Daten sendet die zentrale Einrichtung 10 wiederum eine Broadcastnachricht BN an die Kommunikationsgeräte 21-23, wie es in Fig. 2 gezeigt ist. Im Anschluss daran wählt jedes Kommunikationsgerät 21-23 eine neue Hardware-Adresse MAC1*-MAC3* aus, wie es in Fig. 4 gezeigt ist. Diese neuen ausgewählten oder erzeugten Hardware-Adressen MAC1*-MAC3* können wiederum verwendet werden, bis die Sitzung abgelaufen und die Hardware-Adressen MAC1*-MAC3* entsprechend gelöscht werden.

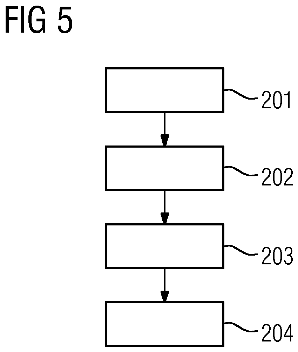

Fig. 5 zeigt ein Verfahren zur Kommunikation zwischen einem Kommunikationsgerät 1, wie es in Fig. 1 gezeigt ist, und einer zentralen Einrichtung 10, wie sie in Fig. 1 - 4 gezeigt ist. In einem ersten Schritt 201 empfängt das Kommunikationsgerät 1 eine Broadcastnachricht BN von der zentralen Einrichtung 10. Wie bereits erläutert weist die Broadcastnachricht BN Informationen zum Initiieren einer Kommunikation zwischen dem Kommunikationsgerät 1 und der zentralen Einrichtung 10 auf.

In einem zweiten Schritt 202 wird eine Hardware-Adresse MAC für das Kommunikationsgerät 1 in Antwort auf die Broadcastnachricht BN zufällig ausgewählt. Die ausgewählte Hardware-Adresse MAC wird zur Adressierung des Kommunikationsgeräts innerhalb des Kommunikationssystems 100 verwendet.

In einem dritten Schritt 203 kommunizieren das Kommunikationsgerät 1 und die zentrale Einrichtung 10 unter Verwendung der ausgewählten Hardware-Adresse MAC. Dies ist während der Dauer einer Sitzung möglich.

In einem vierten Schritt 204 wird nach Ablauf der Dauer der Sitzung die ausgewählte Hardware-Adresse MAC gelöscht. Anschließend kann das Verfahren mit dem ersten Schritt 201 erneut beginnen.

Obwohl die vorliegende Erfindung anhand von Ausführungsbeispielen beschrieben wurde, ist sie vielfältig modifizierbar.

## Patentansprüche

1. Kommunikationsgerät (1), das über eine Schnittstelle mit einer zentralen Einrichtung (10) in einem Kommunikationssystem (100) verbindbar ist, mit:
einer Sende- und Empfangseinheit (3) zum Empfangen einer Broadcastnachricht (BN) von der zentralen Einrichtung (10), wobei die Broadcastnachricht (BN) Informationen zum Initiieren einer Kommunikation zwischen dem Kommunikationsgerät (1) und der zentralen Einrichtung (10) aufweist und wobei die Broadcastnachricht (BN) Informationen aufweist, die Eigenschaften der Hardware-Adresse (MAC) festlegen, wobei die Eigenschaften einen Wertebereich der Hardware-Adresse (MAC) vorgeben, der je nach Größe des Kommunikationssystems und der damit verbundenen Anzahl von Kommunikationsgeräten innerhalb des Kommunikationssystems vergrößert oder verkleinert werden kann, und
einer Steuereinheit (2) zum Auswählen einer Hardware-Adresse (MAC) für das Kommunikationsgerät (1) in Antwort auf die in der Broadcastnachricht (BN) enthaltenen Informationen, wobei die ausgewählte Hardware-Adresse (MAC) zur Adressierung des Kommunikationsgeräts (1) für Nachrichten von der zentralen Einrichtung (10) verwendbar ist,
wobei die Sende- und Empfangseinheit (3) dazu eingerichtet ist, mit der zentralen Einrichtung (10) unter Verwendung der ausgewählten Hardware-Adresse (MAC) während der Dauer einer Sitzung zu kommunizieren, und
wobei die Steuereinheit (2) dazu eingerichtet ist, die ausgewählte Hardware-Adresse (MAC) nach Ablauf der Dauer der Sitzung zu löschen.

2. Kommunikationsgerät (1) nach Anspruch 1,
**dadurch gekennzeichnet,**
**dass** die Eigenschaften eine Gültigkeitsdauer der Hardware-Adresse (MAC) aufweisen.

3. Kommunikationsgerät (1) nach Anspruch 1 oder 2,
**dadurch gekennzeichnet,**
**dass** die Steuereinheit (2) dazu eingerichtet ist, eine Hardware-Adresse (MAC) für das Kommunikationsgerät (1) in Antwort auf die in der Broadcastnachricht (BN) enthaltenen Informationen zufällig oder pseudo-zufällig auszuwählen.

4. Kommunikationsgerät (1) nach einem der Ansprüche 1 bis 3,
**dadurch gekennzeichnet,**
**dass** die Steuereinheit (2) dazu eingerichtet ist, die Hardware-Adresse (MAC) basierend auf den Informationen in der Broadcastnachricht (BN) auszuwählen.

5. Kommunikationsgerät (1) nach einem der Ansprüche 1 bis 4,
**dadurch gekennzeichnet,**
**dass** die Steuereinheit (2) dazu eingerichtet ist, eine Mehrzahl von Hardware-Adressen (MAC) basierend auf den Informationen in der Broadcastnachricht (BN) zu erzeugen.

6. Kommunikationsgerät (1) nach einem der Ansprüche 1 bis 5, **gekennzeichnet durch**
eine Speichereinheit (4), in der eine Mehrzahl von Hardware-Adressen (MAC) gespeichert ist, wobei die Steuereinheit (2) dazu eingerichtet ist, eine Hardware-Adresse (MAC) aus der gespeicherten Mehrzahl von Hardware-Adressen (MAC) auszuwählen.

7. Kommunikationsgerät (1) nach einem der Ansprüche 1 bis 6,
**dadurch gekennzeichnet,**
**dass** die Broadcastnachricht (BN) Informationen aufweist, die eine Dauer der Sitzung festlegen.

8. Kommunikationsgerät (1) nach einem der Ansprüche 1 bis 7,
**dadurch gekennzeichnet,**
**dass** die Dauer der Sitzung durch eine Zeitdauer und/oder eine Anzahl von gesendeten und/oder empfangenen Nachrichten definiert ist.

9. Kommunikationsgerät (1) nach einem der Ansprüche 1 bis 8,
**dadurch gekennzeichnet,**
**dass** die Sende- und Empfangseinheit (3) dazu eingerichtet ist, benutzerspezifische Daten an die zentrale Einrichtung (10) zu senden.

10. Kommunikationssystem (100) mit:
einer zentralen Einrichtung (10) und
einer Anzahl von Kommunikationsgeräten (1, 21, 22, 23) nach einem der Ansprüche 1 bis 9.

11. Kommunikationssystem (100) nach Anspruch 10,
**dadurch gekennzeichnet,**
**dass** das Kommunikationssystem ein leitungsloses Telekommunikationsnetzwerk ist.

12. Kommunikationssystem (100) nach einem der Ansprüche 10 bis 11,
**dadurch gekennzeichnet,**
**dass** das Kommunikationssystem (100) ein Bezahlsystem aufweist, wobei die zentrale Einrichtung (10) dazu eingerichtet ist, Bezahlvorgänge mit den Kommunikationsgeräten (1, 21, 22, 23) durchzuführen.

13. Verfahren zur Kommunikation zwischen einem Kommunikationsgerät (1) und einer zentralen Einrichtung (10) in einem Kommunikationssystem (100), die über eine Schnittstelle miteinander verbindbar sind, mit:
Empfangen (201) einer Broadcastnachricht (BN) von der zentralen Einrichtung (10), wobei die Broadcastnachricht (BN) Informationen zum Initiieren einer Kommunikation zwischen dem Kommunikationsgerät (1) und der zentralen Einrichtung (10) aufweist und wobei die Broadcastnachricht (BN) Informationen aufweist, die Eigenschaften der Hardware-Adresse (MAC) festlegen, wobei die Eigenschaften einen Wertebereich der Hardware-Adresse (MAC) vorgeben, der je nach Größe des Kommunikationssystems und der damit verbundenen Anzahl von Kommunikationsgeräten innerhalb des Kommunikationssystems vergrößert oder verkleinert werden kann,
Auswählen (202) einer Hardware-Adresse (MAC) für das Kommunikationsgerät (1) in Antwort auf die in der Broadcastnachricht (BN) enthaltenen Informationen, wobei die ausgewählte Hardware-Adresse (MAC) zur Adressierung des Kommunikationsgeräts (1) für Nachrichten von der zentralen Einrichtung (10) verwendbar ist,
Kommunizieren (203) zwischen dem Kommunikationsgerät (1) und der zentralen Einrichtung (10) unter Verwendung der ausgewählten Hardware-Adresse (MAC) während der Dauer einer Sitzung, und
Löschen (204) der ausgewählten Hardware-Adresse (MAC) nach Ablauf der Dauer der Sitzung.

## Claims

1. Communication device (1) which can be connected via an interface to a central installation (10) in a communication system (100), comprising:
a transceiver unit (3) for receiving a broadcast message (BN) from the central installation (10), the broadcast message (BN) having information for initiating a communication between the communication device (1) and the central installation (10) and the broadcast message (BN) having information which specifies characteristics of the hardware address (MAC), the characteristics predetermining a range of values of the hardware address (MAC), which range can be enlarged or reduced depending on the size of the communication system and the associated number of communication devices within the communication system, and
a control unit (2) for selecting a hardware address (MAC) for the communication device (1) in response to the information contained in the broadcast message (BN), wherein the selected hardware address (MAC) can be used for addressing the communication device (1) for messages from the central installation (10),
wherein the transceiver unit (3) is designed for communicating with the central installation (10) by using the selected hardware address (MAC) during the period of a session, and
wherein the control unit (2) is designed to delete the selected hardware address (MAC) after the period of the session has expired.

2. Communication device (1) according to Claim 1,
**characterized**
**in that** the characteristics have a validity period of the hardware address (MAC).

3. Communication device (1) according to Claim 1 or 2,
**characterized**
**in that** the control unit (2) is designed to select a hardware address (MAC) for the communication device (1) randomly or pseudo-randomly in response to the information contained in the broadcast message (BN).

4. Communication device (1) according to one of Claims 1 to 3,
**characterized**
**in that** the control unit (2) is designed to select the hardware address (MAC) on the basis of the information in the broadcast message (BN).

5. Communication device (1) according to one of Claims 1 to 4,
**characterized**
**in that** the control unit (2) is designed to generate a plurality of hardware addresses (MAC) on the basis of the information in the broadcast message (BN).

6. Communication device (1) according to one of Claims 1 to 5,
**characterized by**
a storage unit (4) in which a plurality of hardware addresses (MAC) is stored, the control unit (2) being designed to select one hardware address (MAC) from the stored plurality of hardware addresses (MAC).

7. Communication device (1) according to one of Claims 1 to 6,
**characterized**
**in that** the broadcast message (BN) has information which specifies a duration of the session.

8. Communication device (1) according to one of Claims 1 to 7,
**characterized**
**in that** the duration of the session is defined by a period of time and/or a number of transmitted and/or received messages.

9. Communication device (1) according to one of Claims 1 to 8,
**characterized**
**in that** the transceiver unit (3) is designed to send user-specific data to the central installation (10).

10. Communication system (100) comprising:
a central installation (10) and
a number of communication devices (1, 21, 22, 23) according to one of Claims 1 to 9.

11. Communication system (100) according to Claim 10,
**characterized**
**in that** the communication system is a wireless telecommunication network.

12. Communication system (100) according to one of Claims 10 to 11,
**characterized**
**in that** the communication system (100) has a payment system, wherein the central installation (10) is designed to perform payment processes with the communication devices (1, 21, 22, 23) .

13. Method for communication between a communication device (1) and a central installation (10) in a communication system (100) which can be connected to one another via an interface, comprising:
receiving (201) a broadcast message (BN) from the central installation (10), the broadcast message (BN) having information for initiating a communication between the communication device (1) and the central installation (10) and the broadcast message (BN) having information which specifies characteristics of the hardware address (MAC), the characteristics predetermining a range of values of the hardware address (MAC), which range can be enlarged or reduced depending on the size of the communication system and the associated number of communication devices within the communication system,
selecting (202) a hardware address (MAC) for the communication device (1) in response to the information contained in the broadcast message (BN), wherein the selected hardware address (MAC) can be used for addressing the communication device (1) for messages from the central installation (10),
communicating (203) between the communication device (1) and the central installation (10) by using the selected hardware address (MAC) during the period of a session, and
deleting (204) the selected hardware address (MAC) after the period of the session has expired.

## Revendications

1. Appareil de communication (1) qui peut être connecté à un dispositif central (10) dans un système de communication (100) via une interface, comportant :
une unité émettrice et réceptrice (3) pour recevoir un message de diffusion (BN) du dispositif central (10), le message de diffusion (BN) comportant des informations pour amorcer une communication entre l'appareil de communication (1) et le dispositif central (10) et le message de diffusion (BN) comportant des informations qui déterminent des caractéristiques de l'adresse hardware (MAC), les caractéristiques spécifiant une plage de valeurs de l'adresse hardware (MAC) qui peut être agrandie ou réduite selon la taille du système de communication et le nombre d'appareils de communication qui y sont connectés au sein du système de communication et
une unité de commande (2) pour sélectionner une adresse hardware (MAC) pour l'appareil de communication (1) en réponse aux informations contenues dans le message de diffusion (BN), l'adresse hardware (MAC) sélectionnée pour l'adressage de l'appareil de communication (1) pouvant être utilisée pour des messages par le dispositif central (10), l'unité émettrice et réceptrice (3) étant configurée pour communiquer avec le dispositif central (10) moyennant l'utilisation de l'adresse hardware sélectionnée (MAC) pendant la durée d'une session et
l'unité de commande (2) étant configurée pour supprimer l'adresse hardware sélectionnée (MAC) à l'expiration de la durée de la session.

2. Appareil de communication (1) selon la revendication 1, **caractérisé en ce que** les caractéristiques comportent une durée de validité de l'adresse hardware (MAC).

3. Appareil de communication (1) selon la revendication 1 ou 2, **caractérisé en ce que** l'unité de commande (2) est configurée pour sélectionner, aléatoirement ou pseudo-aléatoirement, une adresse hardware (MAC) pour l'appareil de communication (1) en réponse aux informations contenues dans le message de diffusion (BN).

4. Appareil de communication (1) selon l'une des revendications 1 à 3, **caractérisé en ce que** l'unité de commande (2) est configurée pour sélectionner l'adresse hardware (MAC) sur la base des informations contenues dans le message de diffusion (BN).

5. Appareil de communication (1) selon l'une des revendications 1 à 4, **caractérisé en ce que** l'unité de commande (2) est configurée pour générer une pluralité d'adresses hardware (MAC) sur la base des informations contenues dans le message de diffusion (BN).

6. Appareil de communication (1) selon l'une des revendications 1 à 5, **caractérisé par** une unité de mémoire (4) dans laquelle est stockée une pluralité d'adresses hardware (MAC), l'unité de commande (2) étant configurée pour sélectionner une adresse hardware (MAC) dans la pluralité d'adresses hardware (MAC) stockées.

7. Appareil de communication (1) selon l'une des revendications 1 à 6, **caractérisé en ce que** le message de diffusion (BN) comporte des informations qui déterminent une durée de la session.

8. Appareil de communication (1) selon l'une des revendications 1 à 7, **caractérisé en ce que** la durée de la session est définie par une durée de temps et/ou un nombre de messages émis et/ou reçus.

9. Appareil de communication (1) selon l'une des revendications 1 à 8, **caractérisé en ce que** l'unité émettrice et réceptrice (3) est configurée pour envoyer au dispositif central (10) des données spécifiques à l'utilisateur.

10. Système de communication (100) comportant :
un dispositif central (10) et
un nombre d'appareils de communication (1, 21, 22, 23) selon l'une des revendications 1 à 9.

11. Système de communication (100) selon la revendication 10, **caractérisé en ce que** le système de communication est un réseau de télécommunication sans fil.

12. Système de communication (100) selon l'une des revendications 10 à 11, **caractérisé en ce que** le système de communication (100) comporte un système de paiement, le dispositif central (10) étant configuré pour effectuer des opérations de paiement avec les appareils de communication (1, 21, 22, 23).

13. Procédé de communication entre un appareil de communication (1) et un dispositif central (10) dans un système de communication (100), lesquels peuvent être connectés entre eux via une interface, comportant :
la réception (201) d'un message de diffusion (BN) du dispositif central (10), le message de diffusion (BN) comportant des informations pour amorcer une communication entre l'appareil de communication (1) et le dispositif central (10) et le message de diffusion (BN) comportant des informations qui déterminent des caractéristiques de l'adresse hardware (MAC), les caractéristiques spécifiant une plage de valeurs de l'adresse hardware (MAC) qui peut être agrandie ou réduite selon la taille du système de communication et le nombre d'appareils de communication qui y sont connectés au sein du système de communication ;
la sélection (202) d'une adresse hardware (MAC) pour l'appareil de communication (1) en réponse aux informations contenues dans le message de diffusion (BN), l'adresse hardware (MAC) sélectionnée pour l'adressage de l'appareil de communications (1) pouvant être utilisée pour des messages par le dispositif central (10) ;
la communication (203) entre l'appareil de communication (1) et le dispositif central (10) moyennant l'utilisation de l'adresse hardware sélectionnée (MAC) pendant la durée d'une session et
la suppression (204) de l'adresse hardware sélectionnée (MAC) à l'expiration de la durée de la session.
